# EUROPEAN PATENT APPLICATION

(11) **EP 4 421 744 A1**
(43) Date of publication of application: **28.08.2024**
(21) Application number: 23386016.2
(22) Date of filing: 22.02.2023
(51) Int. Cl.: G06T 15/00, G06T 17/20

(54) **DATA PROCESSING APPARATUS AND METHOD**

(71) Applicant: Sony Interactive Entertainment Inc., Tokyo 108-0075 (JP)
(72) Inventor: Jimenez, Daniel P, London, W1F 7LP (GB); Rodriguez Quiros, Estefania, London, W1F 7LP (GB); Michailidis, Lazaros, London, W1F 7LP (GB); Lucas Barcias, Jesus, London, W1F 7LP (GB); Henderson, Christopher, London, W1F 7LP (GB)
(74) Representative: D Young & Co LLP

(57) **Abstract**

There is provided a data processing apparatus for generating one or more images of a virtual environment. The apparatus comprises a rendering processor configured to render a first part of the one or more images; a communication processor configured to request, from a remote computing device, data for rendering a second part of the one or more images; and an output image processor configured to generate the one or more images for display at least in part based on the rendered first part of the one or more images and the data for rendering the second part of the one or more images.

## Description

### BACKGROUND OF THE INVENTION

### Field of the invention

The present invention relates to a data processing apparatus and method for generating one or more images of a virtual environment.

### Description of the Prior Art

The speed and realism with which a scene can be rendered is a key consideration in the field of computer graphics processing. Graphics processing operations are performed by a processing unit (GPU and/or CPU) as part of an execution of an application such as a computer game. Graphics processing operations typically comprise processing of model data or other predefined graphics data for graphical features in accordance with a graphics processing pipeline to generate image data for an image frame.

For an image frame including multiple graphical features, the image data for the image frame is typically generated by performing graphics processing operations using input data structures each defining the respective features in the image frame. For example, graphics processing operations typically comprise one or more geometric processing operations for operating on the vertices of a polygonal mesh data structure to generate image data for an object corresponding to the polygonal mesh. Image data is thus generated for respective graphical features in the image frame.

As virtual systems become more complex with increasingly complex and feature-rich virtual environments, conventional videogame rendering systems (such as graphics engines, graphics drivers, and/or graphics cards) often struggle to render images of a sufficiently resolution and/or at a sufficient frame rate. The processing power of such systems may be scaled (e.g. additional GPUs may be provided) to meet this increased processing load - however, for most users, this is prohibitively expensive. There is therefore a need to improve graphical rendering efficiency.

It is an aim of the present invention to provide improved graphical rendering.

### SUMMARY OF THE INVENTION

Various aspects and features of the present invention are defined in the appended claims and within the text of the accompanying description and include at least:
- In a first aspect, a data processing apparatus is provided in accordance with claim 1.
- In another aspect, a data processing method is provided in accordance with claim 14.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an example of an entertainment system;
- Figure 2 schematically illustrates a data processing apparatus in accordance with embodiments of the disclosure;
- Figure 3 schematically illustrates a remote computing device in accordance with embodiments of the disclosure;
- Figure 4 is a schematic flowchart illustrating an example image generation process;
- Figure 5 is a schematic flowchart illustrating a further example image generation process; and
- Figure 6 is a schematic flowchart illustrating a data processing method in accordance with embodiments of the disclosure.

### DESCRIPTION OF THE EMBODIMENTS

A data processing apparatus and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment system including an entertainment device (i.e. a data processing apparatus) and a cloud server (i.e. a remote computing device).An example of an entertainment device or videogame console may be the Sony^{®} PlayStation 5^{®} which is an example of a data processing apparatus according to embodiments of the present disclosure, and similarly may implement a data processing method (for example under suitable software instruction) according to embodiments of the present disclosure.

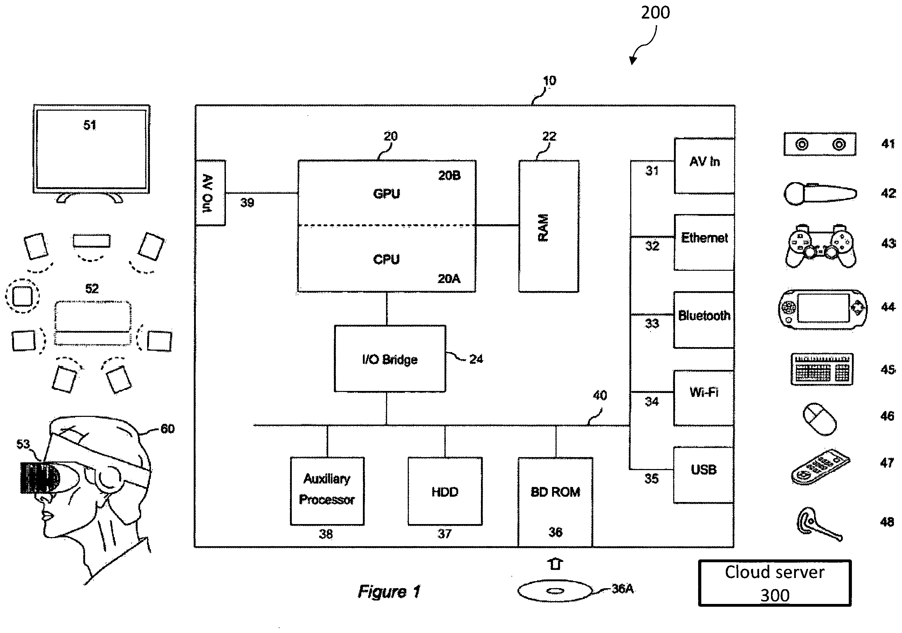

Referring now to the drawings, wherein like reference numerals designate identical or corresponding parts, Figure 1 schematically illustrates an example entertainment system comprising the Sony^{®} PlayStation 4^{®} entertainment device 200 and a cloud server 300. The entertainment device 200 comprises a system unit 10, with various peripheral devices connectable to the system unit. The system unit 10 comprises an accelerated processing unit (APU) 20 being a single chip that in turn comprises a central processing unit (CPU) 20A and a graphics processing unit (GPU) 20B. The APU 20 has access to a random access memory (RAM) unit 22.

The APU 20 communicates with a bus 40, optionally via an I/O bridge 24, which may be a discreet component or part of the APU 20.

Connected to the bus 40 are data storage components such as a hard disk drive 37, and a Blu-ray ^{®} drive 36 operable to access data on compatible optical discs 36A. Additionally the RAM unit 22 may communicate with the bus 40.

Optionally also connected to the bus 40 is an auxiliary processor 38. The auxiliary processor 38 may be provided to run or support the operating system.

The system unit 10 communicates with the cloud server 300 as appropriate via an Ethernet ^{®} port 32, a Bluetooth ^{®} wireless link 33, a Wi-Fi ^{®} wireless link 34, or by any other suitable means.

The system unit 10 communicates with peripheral devices as appropriate via an audio/visual input port 31, an Ethernet ^{®} port 32, a Bluetooth ^{®} wireless link 33, a Wi-Fi ^{®} wireless link 34, or one or more universal serial bus (USB) ports 35. Audio and video may be output via an AV output 39, such as an HDMI port.

The peripheral devices may include a monoscopic or stereoscopic video camera 41 such as the PlayStation Eye ^{®}; wand-style videogame controllers 42 such as the PlayStation Move ^{®} and conventional handheld videogame controllers 43 such as the DualShock 4 ^{®}; portable entertainment devices 44 such as the PlayStation Portable ^{®} and PlayStation Vita ^{®}; a keyboard 45 and/or a mouse 46; a media controller 47, for example in the form of a remote control; and a headset 48. Other peripheral devices may similarly be considered such as a printer, or a 3D printer (not shown).

The GPU 20B, optionally in conjunction with the CPU 20A, generates video images and audio for output via the AV output 39. Optionally the audio may be generated in conjunction with or instead by an audio processor (not shown).

The video and optionally the audio may be presented to a television 51. Where supported by the television, the video may be stereoscopic. The audio may be presented to a home cinema system 52 in one of a number of formats such as stereo, 5.1 surround sound or 7.1 surround sound. Video and audio may likewise be presented to a head mounted display unit 53 worn by a user 60.

In operation, the entertainment device 200 defaults to an operating system such as a variant of FreeBSD 9.0. The operating system may run on the CPU 20A, the auxiliary processor 38, or a mixture of the two. The operating system provides the user with a graphical user interface such as the PlayStation^{®} Dynamic Menu. The menu allows the user to access operating system features and to select games and optionally other content.

Figure 1 therefore shows an example of an entertainment device 200 suitable for performing processing for executing an instance of an interactive gaming application and generating images and audio for output to a user. The entrainment device 200 may for example generate images for display by a display device such as the television 51 and/or the head mounted display unit 53.

In this example, a remote computing device is provided as part of a cloud server and/or service 300 accessible to the entertainment device via an internet connection. The cloud server 300 may comprise one or more GPUs, and/or any other appropriate hardware components, for rendering images.

In an alternative example, the remote computing device may be provided as circuitry accessible to the entertainment device via a wired link or a short-range wireless link. This may reduce lag in communication between the remote computing device and the entertainment device.

It will be appreciated that functionality of the remote computing device may be realised by any suitable number of processors located at any suitable number of devices as appropriate.

In embodiments of the present disclosure, the entertainment device 200 generates one or more images of a virtual environment for display (e.g. via the television 51).

The images generated by the entertainment device 200 are each associated with a virtual camera angle. A virtual camera has an associated viewpoint with respect to the virtual environment such that a portion of the virtual environment is included within the field of view of the virtual camera. The virtual camera may follow a character in the virtual environment to thereby move with respect to the virtual environment. For example, the virtual camera may follow a non-player character (NPC) in a video game or may be controlled responsive to a user input to follow a player-controlled character. In some examples, the virtual camera may provide a first or third person viewpoint of a given character in a game. Alternatively, the virtual camera may have a fixed position with respect to the virtual environment and may be controlled responsive to an input from a spectator (non-playing user) to update an orientation of the virtual camera. Alternatively, the virtual camera may be controlled responsive to an input from a spectator to allow the spectator to change both a position and an orientation for the virtual camera with respect to the virtual environment without the spectator actively participating in a video game. Hence at least one of the position and the orientation of the virtual camera can be updated and at least one of the position and the orientation may optionally be controlled in response to a user input.

In some examples, the entertainment device 200 further comprises a head mounted display (HMD) and at least one of the position and orientation of the virtual camera corresponds to tracked movements of an HMD worn by a user so that the viewpoint for the virtual camera is updated according to the user's head movements. A position and/or orientation of an HMD can be tracked using one or more image sensors and/or one or more inertial sensors, such as an accelerometer, gyroscope and/or magnetometer. For example , known inside-out and/or outside-in tracking techniques using image sensors mounted on an HMD and/or mounted to capture images including an HMD can be used to track the position and orientation of the HMD. Therefore, in some cases the viewpoint for the virtual camera can be controlled by a user to move with respect to the virtual environment based on movement of an HMD.

The virtual camera thus has a viewpoint with respect to the virtual environment and the entertainment device 200 is configured to output an image for display in dependence upon the viewpoint of the virtual camera.

Embodiments of the present invention relate to rendering a first part of one or more images locally using a data processing apparatus, requesting data for rendering a (e.g. remaining) second part of the one or more images from a remote computing device, and generating the one or more images based on the rendered first part and the received data for rendering the second part. This allows reducing the computational load on the local data processing apparatus as part of the rendering process is moved to the remote device. Further, by still rendering the first part of the images locally and therefore utilising both local and remote rendering, the resilience of the system is improved as the first part, which may e.g. be more critical to the user perception of the images, is generated locally so the system is better able to cope with any issues on the side of the remote device (e.g. any communication lag between the apparatus and the device). The present invention is particularly applicable to generating real-time images for video games because by reducing the computational load on the local apparatus, the invention allows increasing the frame rate of the images (and/or their resolution), thereby providing more realistic game graphics for the user.

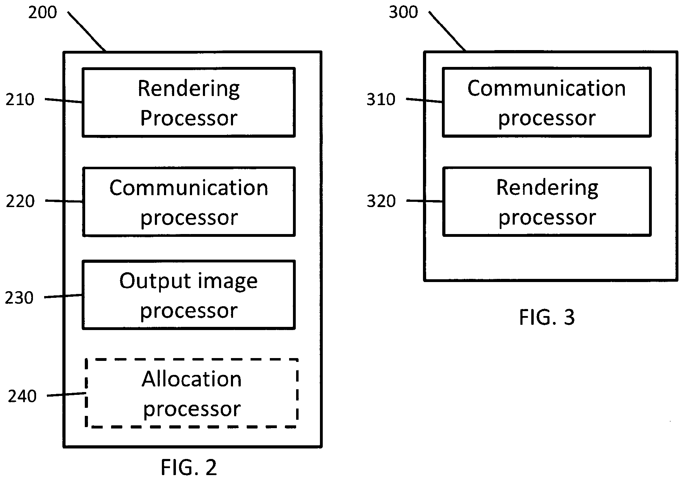

Figure 2 schematically illustrates a data processing apparatus 200 (such as the entertainment device 200 of Figure 1) in accordance with embodiments of the disclosure. The data processing apparatus 200 generates one or more images of a virtual environment (e.g. a virtual environment in a game) for display to a user. The data processing apparatus 200 comprises a rendering processor 210, a communication processor 220, and an output image processor 230. The rendering processor 210 renders a first part of the one or more images (e.g. one or more first graphical features of the virtual environment). The communication processor 220, then or simultaneously, requests (and receives) data for rendering a second part of the one or more images (e.g. one or more second graphical features of the virtual environment) from a remote computing device 300. Subsequently, the output image processor 230 generates the one or more images for display at least in part based on the rendered first part of the one or more images and the data for rendering the second part of the one or more images. In some cases, the data processing apparatus 200 may further comprise an allocation processor 240 configured to allocate graphical features of the virtual environment to the first and second graphical features.

The one or more images may comprise a sequence of images (e.g. image frames), e.g. as part of a video stream. Alternatively, the one or more images may each be unrelated to one another.

Figure 3 schematically illustrates a remote computing device 300 (such as the cloud server 300 of Figure 1) in accordance with embodiments of the disclosure. The remote computing device 300 performs part of the processing needed to generate the images of the virtual environment upon request by the data processing apparatus 200. The remote computing device 300 comprises a communication processor 310 and a rendering processor 320. The communication processor 310 receives the request for data for rendering a second part of the one or more images from the communication processor 220 of the data processing apparatus 200. The rendering processor 320 then generates the data for rendering the second part of the images, and the communication processor 310 transmits this data back to the communication processor 220 of the data processing apparatus 200 for generating the images for display.

The data for rendering the second part of the images transmitted from the remote computing device 300 to the data processing apparatus 200 comprises data for at least partially rendering the second part of the images. In other words, at least part of the operations in the graphics processing pipeline for rendering the second part of the images is moved from the data processing apparatus 200 to the remote computing device 300, thereby reducing the computational load on the data processing apparatus 200. For example, one or more geometry operations (e.g. scene mesh generation, lighting, or clipping), shading operations (e.g. pixel shading), and/or rasterization operations may be performed on the remote computing device 300 and the resulting data transmitted to the data processing apparatus 200.

In one embodiment, the remote computing device 300 generates shading (i.e. shader) data for the second part of the images. This allows greatly reducing the computational load on the data processing apparatus 200 as generating shading data is one of the most computationally-intensive processes in the graphics processing pipeline.

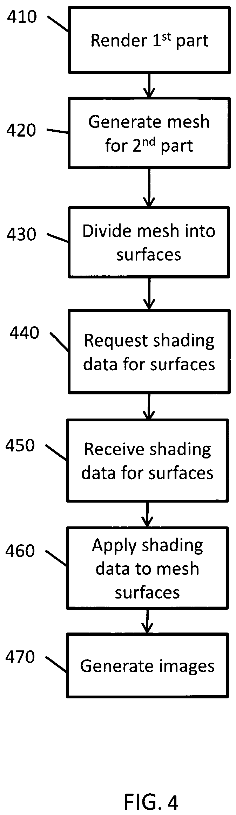

Figure 4 shows a flowchart of an example image generation process by the data processing apparatus 200 according to this embodiment, where the data processing apparatus 200 requests pixel shading data (i.e. data for colouring pixels in the second part of the images) from the remote computing device 300.

At step 410, the rendering processor 210 of the data processing apparatus 200 renders the first part of the images. The first part of the images may be rendered using any suitable techniques for rendering images.

At step 420, the rendering processor 210 generates a mesh of objects of the virtual environment in the second part of the images. For example, the rendering processor 210 may generate the mesh geometry of the objects by modelling the virtual environment objects using vertices connected together to form triangle primitives. In this way the rendering processor 210 generates a mesh of triangles that defines the position and shape of the objects in the second part of the images, such as buildings, trees, mountains, characters, etc. At step 430, the rendering processor 210 divides the mesh generated at step 420 into one or more surfaces. For example, the mesh of a building object may be divided into surfaces (e.g. planes) corresponding to each side of the building shown in the second part of the images. As described in further detail below, dividing the mesh into surfaces improves the simplicity and efficiency of subsequently applying the pixel shading data from the remote computing device 300 to the mesh and recomposing (i.e. reassembling) the second part of the images.

The mesh surfaces may also each be assigned a priority ranking, and the communication processor 220 may request pixel shading data for the surfaces in an order based on the priority ranking. Thus, pixel shading data for the most important surfaces in the virtual environment (e.g. surfaces positioned centrally in the virtual camera view, or surfaces corresponding to objects more proximate to the virtual camera) may be prioritised and received faster thereby reducing lag in the rendering of these surfaces.

At step 440, the communication processor 220 requests pixel shading data for the mesh surfaces defined at step 430 from the remote computing device 300. At step 450, the communication processor 220 receives the pixel shading data requested at step 440 from the remote computing device 300.

The communication processor 220 may request and receive the pixel shading data for each fragment as a function of the mesh surfaces. Thus, the remote computing device 300 may generate the pixel shading data for each mesh surface independently (e.g. in parallel) and transmit the pixel shading data for each mesh surface back to the data processing apparatus 200 as soon as it's generated, thus reducing the overall processing time.

The communication processor 220 may request the pixel shading data in any appropriate format. In some cases, the communication processor 220 may request the pixel shading data as a continuous data stream, such that data is continuously received from the remote computing device 300 and can be further processed (e.g. the pixel shading data can be applied to the mesh as described in further detail below) without delay, thus reducing the overall processing time for generating the images for display. Alternatively, the pixel shading data may be requested in batches, e.g. of one or more images, or one or more graphical features of the images.

At step 460, the output image processor 230 applies the shading data received from the remote computing device at step 450 to the mesh surfaces to render the second part of the images. Dividing the mesh into surfaces and requesting pixel shading data for each surface allows the output image processor 230 to efficiently apply the pixel shading data to the mesh as the mapping between the two is predefined (e.g. via a surface id associated with the request transmitted at step 440) and the shading data can be readily applied to the mesh surfaces.

To reduce overall processing time to generate the images, step 410 and one or more of steps 420-460 may be performed in parallel such that the first and second parts of the images are rendered at least partly in parallel.

At step 470, the output image processor 230 combines the first part of the images rendered at step 410 and the second part of the images rendered at step 460 to generate the images for display to a user. The way in which the first and second parts are combined depends on what each of the parts comprise. In cases where the first and second parts comprise respective sub-parts of the images, these sub-parts may be combined to generate the output images for display, using any suitable image processing methods. In cases where the first and second parts comprise respective subsets of the images (e.g. subsets of frames in a video sequence), these subsets may be intertwined (e.g. to alternate between images from the first and second subsets) to generate the output images (e.g. to generate the output video sequence comprising alternating first images rendered locally by the data processing apparatus 200 and second images partially rendered remotely by the remote computing device 300).

It will be appreciated that step 430 is optional. In an alternative example, the communication processor 220 requests and receives pixel shading data at steps 440 and 450 for the mesh generated at step 420 without dividing the mesh into surfaces.

In some cases, alternatively, or in addition, to pixel shading data, the shading data may comprise any other data typically generated by a shader in a graphics processing pipeline such as one or more of vertex shading data, geometry shading data, and/or tessellation shading data.

In some cases, alternatively or in addition to shading data, the data requested by the data processing apparatus 200 from the remote computing device 300 may comprise data relating to any other operations in the graphics processing pipeline for rendering the second part of the images. For example, in another embodiment, the data processing apparatus 200 may request data for generating the mesh from the remote computing device 300 and optionally subsequently generate pixel shading data locally.

The first and second parts of the one or more images may comprise respective sub-parts of the images, and/or respective subsets of the images (e.g. alternating images).

A virtual environment for a content such as a video game typically includes a number of respective graphical features associated with various objects, such as scenery objects (e.g. buildings in a city virtual environment) or character objects (e.g. a user-controlled character in the video game).

In an example where the first and second parts comprise sub-parts of the images, the first part of the images may comprise one or more first graphical features of the virtual environment, and the second part of the images may comprise one or more second graphical features of the virtual environment. For example, the second part of the one or more images may comprise graphical features that are distant from the virtual camera in the virtual environment, and/or are associated with particle elements, and/or lighting overlays; and the first part may comprise the remaining graphical features in the one or more images.

The allocation processor 240 allocates graphical features of the virtual environment to the first and second graphical features respectively.

The allocation processor 240 may allocate each graphical feature of the virtual environment in an image to the first or second graphical features based on one or more of: a threshold distance in the virtual environment between the graphical feature and a virtual camera associated with the image, a response time from the remote computing device for the data for rendering the second part of the one or more images or for data for rendering the graphical feature, motion (e.g. speed) of the virtual camera in the virtual environment, a location of the graphical feature in a (x-y) plane parallel to a display, an estimated and/or measured gaze direction of a user, an object associated with the graphical feature, one or more settings of an input device controlling the virtual camera, user data, and/or an application associated with the one or more images.

In this way, as described in further detail below, the allocation processor 240 allows improving the balance between reducing the processing load on the data processing apparatus 200 on one hand and reducing errors (and/or their noticeability to the user) in the generated images. In other words, the allocation processor 240 is able to allocate the graphical features in such a way that the processing load on the data processing apparatus 200 is reduced while ensuring that any possible errors (and/or their noticeability to the user) resulting from moving part of the image processing to the remote computing device 300 (e.g. errors due to communication lag between the apparatus 200 and device 300, such as the data for rendering the second part of the images being transmitted one or two frames late by the remote computing device 300) is minimised - and so ensuring that the overall image generation process is resilient to any such errors. For example, as described in further detail below, the second graphical features may be selected/allocated such that, if data for rendering them is unavailable in one frame, the output image processor 230 is able to re-use data for rendering received for a previous frame with the user being less likely (or ideally unable) to notice this.

Considering allocating graphical features based on a threshold distance in the virtual environment between the graphical feature and a virtual camera associated with the image, graphical features within an empirically determined threshold distance may be allocated to the first graphical features and rendered locally by the rendering processor 210 of the data processing apparatus 200, and graphical features beyond the threshold distance may be allocated to the second graphical features and at least partially rendered on the remote computing device 300. Thus, graphical features closer to the virtual camera which are more likely to be focussed on by the user are rendered locally, and more distant features, the rendering of which would typically require significant amounts of processing while being paid less attention to by the user, are at least partially rendered on the remote computing device 300.

The threshold distance may vary across the camera angle of the virtual camera. For example, the threshold distance (and so the cut-off for partially rendering graphical features on the remote computing device 300) may be greater for low camera angles (i.e. near the focal point of the virtual camera) and smaller for higher camera angles (i.e. away from the focal point of the virtual camera and nearer the edges of its view).

More generally, the threshold distance may be set based on any one or more of the other factors listed above used by the allocation processor 240 to allocate graphical features.

For example, the threshold distance may depend on the response time from the remote computing device 300 for the data for rendering the second part of the images as a whole, or data for rendering the particular graphical feature - in other words, on the communication lag for the data for rendering. The threshold distance may increase with increasing communication lag, such that fewer graphical features are rendered on the remote computing device 300 if the communication lag increases. In this way, the image generation process is able to react to the current communication bandwidth, and ensure that the images for display are of the requisite quality thereby providing a consistent visual experience for the user.

Alternatively, or in addition, the threshold distance may depend on motion of the virtual camera in the virtual environment. The threshold distance may depend on virtual camera motion in the x-y plane (i.e. side-to-side and up-down motion) and/or in the z-plane (i.e. forward/backward motion). The motion may relate to any scalar (e.g. speed), vector (e.g. velocity and/or acceleration), current, predicted, or historic (e.g. historic motion patterns for the user, or a group of users such as users playing a given game) motion of the virtual camera. For example, the motion of the virtual camera may be predicted based on one or more settings of an input device controlling the virtual camera, such the cursor speed/sensitivity (e.g. at higher cursor speed, greater motion may be expected). Alternatively, or in addition, the motion of the virtual camera may be predicted based on an application associated with the displayed images - such as the video game (or type thereof) being played by the user, where, e.g., the motion is predicted as greater if the user is playing a shooting game than if they were playing a soccer game.

The threshold distance may increase with increasing motion of the virtual camera, such that fewer graphical features are rendered on the remote computing device 300 if the motion increases. This allows the division of processing load between the data processing apparatus 200 and the remote computing device 300 to react to use patterns and thus further improves the balance between local processing load and image generation errors. For example, when a user is playing a driving game (e.g. Gran Turismo^{®}) and driving a car at a given speed, graphical features proximate to the virtual camera need to be updated/re-rendered to a greater extent between consecutive frames than distant graphical features, and any errors in the rendering of features is more noticeable to a user for proximate features than for distant features. This effect is further magnified when the speed at which the virtual camera is moving is increased (e.g. from 20km/h in the virtual environment to 100km/h), and any lag in rendering features becomes more noticeable for yet more distant features as these are approached by the virtual camera and/or updated faster. Or as another example, if historic motion patterns for a given user indicate that they tend to move the virtual camera to a greater extent, then the threshold distance may similarly be increased.

The relationship between the threshold distance and the communication lag and/or motion (and/or any other factor) may be determined empirically for the given data processing apparatus 200 and remote computing device 300, and may comprise any appropriate relationship, such as a linear, quadratic, or logarithmic relationship.

Considering allocating graphical features based on the response time for the data for rendering from the remote computing device 300, in some cases, the number of features allocated to the first graphical features for local rendering may increase with increasing (e.g. recent or expected) response time (i.e. communication lag) - for example, by increasing the threshold distance as discussed above. Alternatively, the allocation processor 240 may allocate each feature to the first or second features depending on the expected response time for the data for rendering that feature. For example, if the expected response time for a graphical feature exceeds a threshold (e.g. such that it would not be received in time for generating the current image frame), it may be allocated to the first graphical features.

Considering allocating graphical features based on a gaze direction of the user, the allocation processor 240 may allocate graphical features adjacent to (e.g. within a threshold distance of) the gaze direction to the first graphical features for local rendering, and/or allocate graphical features distant from (e.g. beyond a further threshold distance of) the gaze direction to the second graphical features for at least partially remote rendering. This allows the allocation to more accurately reflect the user's visual focus, and so ensure that features the user is directing their gaze to are rendered locally (and so unaffected by communication lag) while features away from the user's gaze are partially rendered remotely to reduce the computational load on the data processing apparatus 200.

The gaze direction of the user may be measured and/or estimated. In the first case, the gaze direction may, for example, be measured using one or more sensors provided as part of an HMD to track a user's gaze direction when wearing the HMD. Similarly, one or more sensors may be arranged with respect to a user to track a user's gaze direction when viewing a conventional monitor such as the television 51. Data indicative of a detected gaze direction may then be received by the data processing apparatus 200. In the second case, the gaze direction of the user may be estimated based on one or more expected areas of the display where the user is likely to focus their gaze. These areas may be determined based on any relevant factors. For example, the areas may be determined based on the displayed objects (e.g. a user is likely to direct their gaze to an area of an image where a new character appears), or sound output to a user (e.g. if gunshot sounds are played to the left of a user, the user is likely to look to the left). In a simple example, the estimated gaze direction may be taken as the centre of the display.

Considering allocating graphical features based on an object associated with each graphical feature, graphical features associated with objects that the user is likely to pay more attention to may be allocated to the first graphical features and vice versa for the second graphical features. For example, graphical features associated with characters and/or mobile/moving graphical features (e.g. player or computer-controlled characters) may be allocated to the first graphical features, and graphical features associated with the scenery and/or static graphical features may be allocated to the second graphical features. As another example, graphical features associated with particle elements (such as a fire or a waterfall) or lighting overlays may be allocated to the second graphical features as rendering such features can be computationally-expensive to do locally.

Optionally, if the number of the first/second graphical features allocated by the allocation processor 240 to rendering on the local rendering processor 210 / on the remote computing device 300 exceeds a predetermined threshold, the resolution at which the first/second graphical features are rendered is lowered to maintain a desired frame rate.

In some cases, the allocation processor 240 assigns a priority ranking to the second graphical features, and the communication processor 220 requests data for rendering each of the second graphical features in an order based on the priority ranking. This priority ranking may be assigned based on any one or more of the above discussed factors for allocating graphical features. For example, the second graphical features may be priority ranked based on their distance in the x-y plane from the gaze direction of the user.

In some cases, the allocation processor 240 may allocate features such that the second graphical features are distributed (optionally evenly) between first graphical features in the one or more images. For example, for features beyond a threshold distance in the virtual environment, the allocation processor 240 may allocate alternating (or every x) pixels to the first graphical features and the remaining pixels to the second graphical features. This improves resilience of the image generation process to errors in relation to the second graphical features as if these are not received (and/or are of poor quality), the output image processor 230 may interpolate the pixels allocated to the first graphical features to generate the second part of the images in 'back-up' lower resolution.

In another example, where the images that are generated for display comprise a plurality of images for display in sequence, the first and second parts of the images may comprise first and second subsets of the plurality of images. In this example, the communication processor 220 may request data for partially rendering the second subset of images (e.g. pixel shading data for these images). Alternatively, the communication processor 220 may request fully rendered images of the second subset of images, so that these can be directly displayed to the user.

Dividing the plurality of images into first and second subsets in this way allows increasing the frame rate of the sequence of images as the remote computing device 300 at least partially renders a subset of the images thus increasing the overall number of images that can be rendered in a given time period. For example, for every x consecutive images of the plurality of images, the first/second subset may comprise a first of the x images, and the second/first subset comprises the remaining (x-1) images. In one implementation, the first and second subsets may each comprise alternate images of the plurality of images - in which case, the frame rate may be doubled (e.g. from 30 frames per second (fps) to 60 fps).

The image generation process described with reference to Figure 4 above may comprise further techniques for mitigating rendering errors.

Firstly, the communication processor 220 may request (e.g. as part of step 440), from the remote computing device 300, data for rendering one or more graphical features of the virtual environment that are out of view of a virtual camera associated with the generated images. This allows preemptively, at least partially, rendering these out of view features in anticipation of future movement of the virtual camera so that these features can be quickly and efficiently rendered once they come into view. This also allows mitigating the impact of future communication lag between the remote computing device 300 and data processing apparatus, as the rendered out of view features may be used while the latest data for rendering the second part of the images is awaited from the remote computing device 300. In addition, since this pre-emptive rendering is done on the remote computing device 300, the processing load on the data processing apparatus 200 is not increased.

For example, the communication processor 220 may request data for rendering graphical features obstructed by other graphical features in the one or more images and/or graphical features outside a field of view of the virtual camera.

Considering requesting data for rendering obstructed features, when generating the mesh of objects in the second part of the images at step 420 above, the rendering processor 210 may generate the mesh with reduced, or without, z-culling (i.e. generate a mesh also for one or more obstructed graphical features) and the communication processor 220 may then request shading data for surfaces forming part of said mesh with reduced (or omitted) z-culling at step 440. For example, in a driving game, the communication processor 220 may request rendering data for objects on the side of the road which are obstructed (and so would not be present in the mesh if z-culling was applied) in one frame but may be shown in a subsequent frame after the virtual camera has moved forwards. In addition to allowing preemptively and efficiently rendering the images as discussed above, by at least partially omitting z-culling, this approach allows transmitting the request for rendering data at step 440 to the remote computing device 300 faster (because with less, or no, z-culling fewer processing steps are required on the data processing apparatus 200 to generate the mesh before transmitting this request), and thereby reducing the overall time to generate the images. On the remote computing device 300 side, processing resources may easily be scaled so communication lag is a bigger problem than processing lag - thus, by reducing the time to send the request at step 440, the system becomes more resilient to communication lag between the data processing apparatus 200 and the remote computing device 300.

Considering requesting data for rendering features outside a field of view of the virtual camera, the communication processor 220 may, e.g., request data for rendering features to the right-left and/or top-bottom in the x-y plane (i.e. plane parallel to the display) of the current virtual camera view. This allows pre-empting virtual camera view changes caused by user input and efficiently rendering the images after such view changes. For example, in the event of a communication lag between the data processing apparatus 200 and the remote computing device 300 for a given frame/image, any top/down and/or lateral (i.e. side-to-side) motion of the virtual camera can be accommodated by rendering an image frame using data received for rendering out of field of view features in a previous frame. This is particularly advantageous for lateral motion of the virtual camera in order to avoid parallax errors caused by late, or incorrect, rendering of the images after the lateral motion.

In some cases, the communication processor 220 may request data for rendering features in all viewing directions for the given position of the virtual camera (i.e. up to a 360 degree view around the virtual camera position). This allows accommodating any rotation of the virtual camera by the user between images/frames. It also does not require additional processing on the data processing apparatus 200, and since processing load on the remote computing device 300 may be scaled and parallelised as needed the overall time for generating the images may also be unchanged. Thus, the system is able to efficiently render images upon virtual camera view changes. The viewing direction(s) chosen may be dependent upon current in-game activity; for example if the user is currently panning in a given direction, then it is preferable to request additional data for features currently out of view in that direction rather than, say, the opposite direction. By contrast if the user is reversing / retreating in the game, then is it preferable to request additional data for features currently out of view in in all directions (i.e. top and bottom and left and right) as the virtual camera pulls back in the scene. The number/amount of/extent of features requested can optionally at least in part be a function of the rate of virtual motion and hence the amount of change of view possible between frames for the expected/target frame rate.

The one or more out of view graphical features for which rendering data is requested may be selected based on any one or more of the factors discussed above in relation to allocation of features to the first and second graphical features by the allocation processor 240, including one or more of: a threshold distance in the virtual environment between the graphical feature and a virtual camera associated with the image, a response time from the remote computing device for the data for rendering the second part of the one or more images or for data for rendering the graphical feature, motion (e.g. speed) of the virtual camera in the virtual environment, a location of the graphical feature in a (x-y) plane parallel to a display, an estimated and/or measured gaze direction of a user, an object associated with the graphical feature, one or more settings of an input device controlling the virtual camera, user data, and/or an application associated with the one or more images.

These factors may be used to estimate the probability of the virtual camera view changing (e.g. in the next one or more frames/images). For example, considering the application associated with the one or more images, the probability of the virtual camera view changing between frames may be estimated as higher for a shooting game (where a user typically frequently moves their viewpoint to evaluate the environment) than for a driving game (where a user typically looks forwards most of the time).

Alternatively or in addition, as noted above considering one or more settings of an input device controlling the virtual camera, the probability of the virtual camera view changing may be estimated as higher with, e.g., increased cursor speed, or increased joystick sensitivity.

Alternatively or in addition, considering user data, the probability of the virtual camera view changing may be estimated based on a user's (or a group of users) previous use patterns. For example, the probability of virtual camera view change may be estimated based on historic virtual camera view changes for one or more user(s). This historic data may be in relation to the user(s) historic use in general, or a subset of the user(s) historic use - e.g. when using a particular application (e.g. playing a particular game), or in a given timespan (e.g. last two weeks).

Secondly, in order to mitigate rendering errors, the communication processor 220 may monitor the receipt data for rendering the second part of the images from the remote computing device 300 and if the rendering data is not received in time or not received in full, the communication processor 220 may initiate one or more alternative methods for rendering the second part of the images in order to generate the images despite such communication issues.

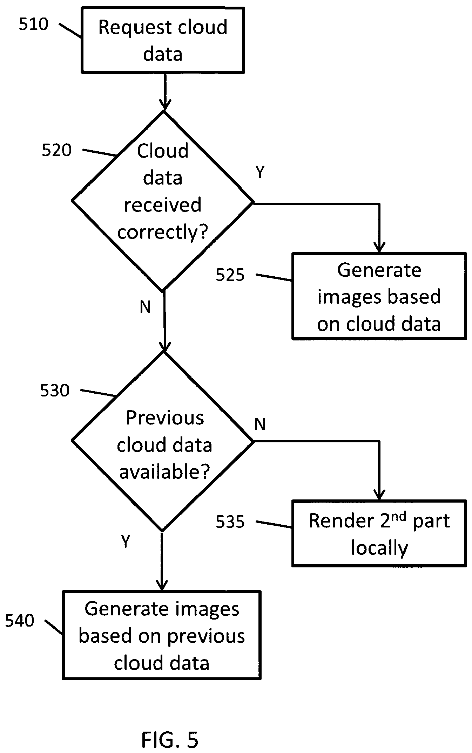

Figure 5 shows a flowchart of a further example image generation process illustrating this rendering error mitigation approach. For simplicity, this example is described in relation to the generation of one image - it will be appreciated that the method can be extended to the generation of any number of images. The method of Figure 5 allows the system to react to communication issues and generate images for display in the event of such issues in an efficient manner.

At step 510, the communication processor 210 requests data (e.g. cloud data) for rendering the second part of an image from the remote computing device 300 (e.g. from a cloud server), as described elsewhere herein.

At step 520, the communication processor 210 determine whether the data for rendering the second part of the image is received correctly. For example, the communication processor 210 may determine if this data is received within a predetermined time period (i.e. whether the response time for the data is within a predetermined threshold) and/or if the received data is complete (e.g. whether pixel shading data for all pixels in the second part of the image is received).

If both conditions are met, the communication processor 210 determines that the data is received correctly at step 520. Subsequently, at step 525, the image for display is generated based on the data received from the remote computing device 300, as described elsewhere herein.

If either of these conditions is not met, the communication processor 210 may determine that the data is not received correctly at step 520, and the method proceeds to step 530.

At step 530, the communication processor 210 determines whether previously received (e.g. in relation to a previous image) rendering data is available and is suitable for rendering the current second part of the image. For example, the communication processor 210 determines whether rendering data received for a previous image frame (e.g. a frame within a predetermined number of frames of the current frame) is available and suitable for rendering the second part of the current frame.

The previously received rendering data may comprise data for rendering the second part of a previous image, and/or data for rendering graphical features of the virtual environment that are out of view of a virtual camera associated with a previous image as discussed above.

If previously received rendering data is available and is suitable for rendering the current second part of the image, the method proceeds to step 540.

At step 540, the output image processor 230 generates the image for display based on the previously received rendering data. For example, the rendering processor 210 generates an updated mesh of objects of the virtual environment in the second part of the current image, and applies (e.g. warps) shading data received in relation to a previous image to the updated mesh. For example, for a user playing a game and walking forwards between frames/images, the shading data from a previous frame may be scaled to provide shading for the updated mesh. Or, as a further example, the output image processor 230 may re-use data for rendering a particle element (e.g. a fire or a waterfall) received from the remote computing device 300 for one frame for one or more subsequent frames.

As discussed above, graphical features are preferably allocated to the first and second graphical features using the allocation processor 240 in such a way that the output image processor 230 is able to re-use data for rendering received for a previous frame for generating the current frame, with the user being less likely (or ideally unable) to notice this.

If previously received rendering data is not available and/or is not suitable for rendering the current second part of the images, the method proceeds to step 535.

At step 535, the rendering processor 210 renders the second part of the image itself, e.g. in the same way as described above in relation to rendering of the first part of the image. This provides a back-up mode of operation, and ensures that images for display are generated in event of a (even complete) failure to receive rendering data from the remote computing device 300.

The rendering processor 210 may render the second part of the image at reducedquality. The request for data for rendering the second part of the image may be transmitted in parallel to rendering of the first part of the image. Thus, by the time the method gets to step 535, the first part of the image may already be partially rendered. Hence, rendering the second part of the image at lower quality (e.g. lower resolution or lower texture, lighting, and/or mesh complexity) allows ensuring that the second part is rendered at the same time as the first part, and so, e.g., that the two parts can be combined without reducing the frame rate.

In an alternative example, if the received data for rendering the second part of the image is incomplete as determined at step 520, the rendering processor 210 renders the second part of the image using the incomplete data, e.g. by interpolating incomplete shading data across the generated mesh.

In an alternative example of the image generation process described above, in parallel to the rendering processor 210 rendering an image, the communication processor 220 requests, from the remote computing device 300, data for rendering one or more graphical features of the virtual environment that are out of view of a virtual camera associated with the image. For a subsequent image, the output image processor 230 then generates the subsequent image for display at least partly based on the data for rendering out of view features received in relation to a previous image. This allows the image generation process to efficiently and quickly react to any changes in virtual camera angle view between images. This is particularly beneficial in video games (e.g. a shooting game) where users frequently change the virtual camera view, and allows reducing any rendering lag caused by such sudden virtual camera view changes.

Referring back to Figure 2, in a summary embodiment of the present invention, a data processing apparatus 200 may comprise the following:
A rendering processor 210 configured (for example by suitable software instruction) to render a first part of the one or more images, as described elsewhere herein.
A communication 220 processor configured (for example by suitable software instruction) to request, from a remote computing device 300, data for rendering a (different) second part of the one or more images, as described elsewhere herein.
And an output image processor 230 configured (for example by suitable software instruction) to generate the one or more images for display at least in part based on the rendered first part of the one or more images and the data for rendering the second part of the one or more images, as described elsewhere herein.

Of course, the functionality of these processors may be realised by any suitable number of processors located at any suitable number of devices as appropriate rather than requiring a one-to-one mapping between the functionality and processing units.

It will be apparent to a person skilled in the art that variations in the above apparatus corresponding to operation of the various embodiments of the method and/or apparatus as described and claimed herein are considered within the scope of the present disclosure, including but not limited to that:
- the data for rendering the second part comprises shading data for the second part of the one or more images, as described elsewhere herein;
   - in this case, optionally, the rendering processor 220 is configured to generate a mesh of objects of the virtual environment in the second part of the one or more images, and the output image processor 230 is configured to apply the shading data to the mesh, as described elsewhere herein;
      ▪ where, optionally, the communication processor 220 is configured to divide the mesh into one or more surfaces, and to request shading data for (each of) the one or more surfaces, where the shading data is optionally received as a function of mesh surface, as described elsewhere herein;
   - in this case, optionally, the shading data comprises pixel shading data, as described elsewhere herein;
- the first part of the one or more images comprises one or more first graphical features of the virtual environment, and the second part of the one or more images comprises one or more second graphical features of the virtual environment, as described elsewhere herein;
   - in this case, optionally, the data processing apparatus further comprises an allocation processor 240 configured to allocate graphical features of the virtual environment to the first and second graphical features, as described elsewhere herein;
      ▪ where, optionally, the allocation processor 240 allocates a graphical feature to the first or second graphical features at least in part based on a threshold distance in the virtual environment between the graphical feature and a virtual camera associated with the one or more images (i.e. the virtual camera associated with image comprising the graphical feature), as described elsewhere herein;
      ▪ where, optionally, the allocation processor 240, alternatively or in addition, allocates a graphical feature to the first or second graphical features at least in part based on a response time from the remote computing device for: the data for rendering the second part of the one or more images, or data for rendering the graphical feature, as described elsewhere herein;
      ▪ where, optionally, the allocation processor 240, alternatively or in addition, allocates a graphical feature to the first or second graphical features at least in part based on one or more of: motion (e.g. speed) of the virtual camera in the virtual environment; a gaze direction of a user; an object associated with the graphical feature; one or more settings of an input device controlling the virtual camera; and/or an application associated with the one or more images, as described elsewhere herein;
      ▪ where, optionally, the allocation processor 240 is configured to assign a priority ranking to the second graphical features, and the communication processor 220 is configured to request data for rendering each of the second graphical features in an order based on the priority ranking, as described elsewhere herein;
      ▪ where, optionally, the allocation processor 240 is configured to allocate features such that the first/second graphical features are evenly distributed between second/first graphical features in the one or more images, as described elsewhere herein;
- the one or more images comprise a plurality of images for display in sequence, and the first and second parts of the one or more images comprise first and second subsets of the plurality of images, as described elsewhere herein;
   - in this case, optionally, for every x consecutive images of the plurality of images, the first/second subset comprises a first of the x images, and the second/first subset comprises the remaining (x-1) images, as described elsewhere herein;
      ▪ where, optionally, the first and second subsets each comprise alternate images of the plurality of images, as described elsewhere herein;
   - in this case, optionally, the rendering processor 210 is configured to render images of the first subset of the plurality of images, and the communication processor 220 is configured to request rendered images of the second subset of the plurality of images, as described elsewhere herein;
- the communication processor is configured to request, from the remote computing device, data for rendering one or more graphical features of the virtual environment that are out of view of a virtual camera associated with the one or more images, as described elsewhere herein;
   - in this case, optionally, the one or more out of view graphical features comprise: one or more graphical features obstructed by other graphical features in the one or more images, and/or one or more graphical features outside a field of view of the virtual camera, as described elsewhere herein;
   - in this case, optionally, the one or more out of view graphical features are selected based on one or more of: a threshold distance in the virtual environment between the graphical feature and a virtual camera associated with the one or more images; a response time from the remote computing device for: the data for rendering the second part of the one or more images, or data for rendering the graphical feature; motion (e.g. speed) of the virtual camera in the virtual environment; a gaze direction of a user; an object associated with the graphical feature; one or more settings of an input device controlling the virtual camera; and/or an application associated with the one or more images, as described elsewhere herein;
- if a response time for the data for rendering the second part of the one or more images exceeds a predetermined threshold and/or if the received data is incomplete: the rendering processor 210 is configured to render the second part of the one or more images, optionally at a lower quality than that of the first part, and the output image processor 230 is configured to generate the one or more images for display based on the first and second parts of the one or more images rendered by the rendering processor;
   - alternatively, or in addition, the output image processor 230 is configured to generate the one or more images for display at least in part based on previously received data for rendering the second part of the one or more images, and/or previously received data for rendering one or more graphical features of the virtual environment that are out of view of a virtual camera associated with the one or more images, as described elsewhere herein;
- the communication processor 220 is configured to receive the data for rendering the second part of the one or more images from the remote computing device 300 as a continuous data stream, as described elsewhere herein;
- the one or more images are images for a videogame, as described elsewhere herein.

In another summary embodiment of the present invention, a data processing apparatus 200 for generating one or more images of a virtual environment comprises: a rendering processor 210 configured to render a first image; a communication processor 220 configured to request, from a remote computing device 300, data for rendering one or more graphical features of the virtual environment that are out of view of a virtual camera associated with the first image; an output image processor 230 configured to generate a second, subsequent image, for display at least in part based on the received data for rendering one or more graphical features of the virtual environment that are out of view of the virtual camera associated with the first image.

Referring back to Figure 3, in another summary embodiment of the present invention, a remote computing device 300 may comprise the following.

A communication processor 310 configured (for example by suitable software instruction) to receive a request, from a data processing apparatus 200, for data for rendering a second part of one or more images; and to transmit said data to the data processing apparatus 200, as described elsewhere herein.

And a rendering processor 320 configured (for example by suitable software instruction) to generate the data for rendering the second part of the one or more images, as described elsewhere herein.

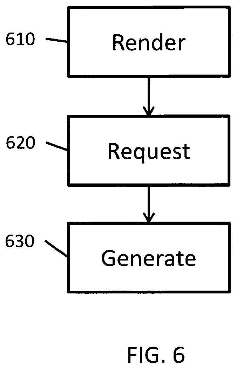

Referring to Figure 6, in another summary embodiment of the present invention a data processing method comprises the following steps.

A step 610 comprises rendering a first part of the one or more images, as described elsewhere herein.

A step 620 comprises requesting, from a remote computing device 300, data for rendering a second part of the one or more images, as described elsewhere herein.

A step 630 comprises generating the one or more images for display at least in part based on the rendered first part of the one or more images and the data for rendering the second part of the one or more images, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non transitory machine readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A data processing apparatus for generating one or more images of a virtual environment, the apparatus comprising:
a rendering processor configured to render a first part of the one or more images;
a communication processor configured to request, from a remote computing device, data for rendering a second part of the one or more images; and
an output image processor configured to generate the one or more images for display at least in part based on the rendered first part of the one or more images and the data for rendering the second part of the one or more images.

2. The data processing apparatus of claim 1, wherein the data for rendering the second part comprises shading data for the second part of the one or more images.

3. The data processing apparatus of claim 2, wherein the rendering processor is configured to generate a mesh of objects of the virtual environment in the second part of the one or more images, and the output image processor is configured to apply the shading data to the mesh.

4. The data processing apparatus of claim 3, wherein the communication processor is configured to divide the mesh into one or more surfaces, and to request shading data for each of the one or more surfaces.

5. The data processing apparatus of any preceding claim, wherein the first part of the one or more images comprises one or more first graphical features of the virtual environment, and the second part of the one or more images comprises one or more second graphical features of the virtual environment; and wherein the data processing apparatus further comprises an allocation processor configured to allocate graphical features of the virtual environment to the first and second graphical features.

6. The data processing apparatus of claim 5, wherein the allocation processor allocates a graphical feature to the first or second graphical features at least in part based on a threshold distance in the virtual environment between the graphical feature and a virtual camera associated with the one or more images.

7. The data processing apparatus of claim 5 or 6, wherein the allocation processor allocates a graphical feature to the first or second graphical features at least in part based on a response time from the remote computing device for: the data for rendering the second part of the one or more images, or data for rendering the graphical feature.

8. The data processing apparatus of any of claims 5 to 7, wherein the allocation processor allocates a graphical feature to the first or second graphical features at least in part based on one or more selected from the list consisting of:
i. motion of the virtual camera in the virtual environment;
ii. a gaze direction of a user;
iii. an object associated with the graphical feature;
iv. one or more settings of an input device controlling the virtual camera; and
v. an application associated with the one or more images.

9. The data processing apparatus of any of claims 5 to 8, wherein the allocation processor is configured to assign a priority ranking to the second graphical features, and wherein the communication processor is configured to request data for rendering each of the second graphical features in an order based on the priority ranking.

10. The data processing apparatus of any of claims 1 to 4, wherein the one or more images comprise a plurality of images for display in sequence, and the first and second parts of the one or more images comprise first and second subsets of the plurality of images.

11. The data processing apparatus of any preceding claim, wherein the communication processor is configured to request, from the remote computing device, data for rendering one or more graphical features of the virtual environment that are out of view of a virtual camera associated with the one or more images; preferably wherein the one or more out of view graphical features comprise: one or more graphical features obstructed by other graphical features in the one or more images, and/or one or more graphical features outside a field of view of the virtual camera.

12. The data processing apparatus of any preceding claim, wherein if a response time for the data for rendering the second part of the one or more images exceeds a predetermined threshold and/or if the received data is incomplete:
the rendering processor is configured to render the second part of the one or more images, at a lower quality than that of the first part, and the output image processor is configured to generate the one or more images for display based on the first and second parts of the one or more images rendered by the rendering processor.

13. The data processing apparatus of any preceding claim, wherein if a response time for the data for rendering the second part of the one or more images exceeds a predetermined threshold and/or if the received data is incomplete:
the output image processor is configured to generate the one or more images for display at least in part based on: previously received data for rendering the second part of the one or more images, and/or previously received data for rendering one or more graphical features of the virtual environment that are out of view of a virtual camera associated with the one or more images.

14. A data processing method for generating one or more images of a virtual environment, the method comprising:
rendering a first part of the one or more images;
requesting, from a remote computing device, data for rendering a second part of the one or more images; and
generating the one or more images for display at least in part based on the rendered first part of the one or more images and the data for rendering the second part of the one or more images.

15. A computer program comprising computer executable instructions adapted to cause a computer system to perform the method of claim 14.
